Europäisches Patentamt

European Patent Office

Office européen des brevets

(19)

(11) Veröffentlichungsnummer : **0 106 294**
**B1**

(12) # EUROPÄISCHE PATENTSCHRIFT

(45) Veröffentlichungstag der Patentschrift :
**10.02.88**

(21) Anmeldenummer : **83110064.9**

(22) Anmeldetag : **08.10.83**

(51) Int. Cl.⁴ : **A 47 J 31/08**

(54) **Stapel von Filterblättern aus Papier.**

(30) Priorität : **12.10.82 DE 3237702**

(43) Veröffentlichungstag der Anmeldung :
**25.04.84 Patentblatt 84/17**

(45) Bekanntmachung des Hinweises auf die Patenterteilung : **10.02.88 Patentblatt 88/06**

(84) Benannte Vertragsstaaten :
**AT BE CH DE FR GB IT LI LU NL SE**

(56) Entgegenhaltungen :
**DE-A- 2 614 235**
**DE-U- 1 926 850**
**DE-U- 1 930 929**
**FR-A- 2 210 370**
**FR-A- 2 380 057**
**US-A- 2 149 499**
**US-A- 3 741 386**

(73) Patentinhaber : **Himmelsbach Produktions AG**
**Artherstrasse 163**
**CH-6317 Oberwil (CH)**

(72) Erfinder : **Himmelsbach, Fritz**
**Artherstrasse 163**
**CH-6317 Oberwil (CH)**

(74) Vertreter : **Fiedler, Otto Karl, Dipl.-Ing.**
**Patentanwalt Hug Interlizenz AG Austrasse 44 Post-**
**fach**
**CH-8045 Zürich (CH)**

## Beschreibung

Die vorliegende Erfindung bezieht sich auf Stapel von Blättern aus Filterpapier mit im wesentlichen kreisförmigem Umriss, wie sie etwa in Kaffeemaschinen zur Zubereitung von Kaffee Verwendung finden.

Insbesondere bei Kaffeemaschinen, sei es für den Gebrauch im Haushalt, sei es für gewerblichen Gebrauch in Gaststätten, werden Filtereinsätze benötigt, die meistens die Form eines einzelnen, kreisrunden Filterpapierblattes besitzen. Oft sind diese Filterblätter auch in eine bestimmte Form geprägt, zum Beispiel in eine tassen- oder schüsselähnliche Gestalt. Die Konfektionierung dieser Filterblätter erfolgt in Stapeln von etwa 50 oder 100 Stück, wobei die Bildung der Stapel im allgemeinen bei der Herstellung, d. h. direkt nach dem Ausstanzen der einzelnen Blätter, erfolgt. Eine Verformung in die erwähnten Tassen- oder Schüsselgestalt geschieht dann im Normalfall stapelweise.

Durch das Ausstanzen der Filterblätter werden diese an der Aussenkontur relativ stark zusammengepresst. Dadurch entstehen beim Entnehmen eines einzelnen Filterblattes vom Stapel insofern Schwierigkeiten, als die Einzelblätter zusammenhaften und nur mit Mühe voneinander zu trennen sind. Diese Schwierigkeiten sind insbesondere bei den nachträglich stapelweise verformten Filterblättern zu beobachten, da die Verformung unter beträchtlichem Druck erfolgt, so dass ein Aneinanderhaften der einzelnen Filterblätter begünstigt wird.

Es ist die Aufgabe der vorliegenden Erfindung, diese Probleme zu lösen und einen Stapel der eingangs erwähnten Art zu schaffen, bei den das Abheben eines einzelnen Filterblattes ohne Schwierigkeiten möglich ist. Dabei soll auch gewährleistet sein, dass die Bildung des Stapels während bzw. nach der Herstellung genau so einfach ist wie bisher, ohne dass zusätzliche Arbeitsschritte erforderlich werden.

Man hat zwar schon Anordnungen vorgeschlagen, die das Abheben des jeweils obersten Blattes von einem Stapel erleichtern sollen. So wird z. B. in der französischen Patentanmeldung Nr. 2210370 vorgeschlagen, innerhalb eines Stapels Blattgruppen oder Einzelblätter gegeneinander versetzt, etwa um eine Mittelachse gegeneinander verdreht, anzuordnen. Jedes der Blätter des Stapels besitzt dabei identische Gestalt. Abgesehen davon, dass sich dieser Vorschlag nur schwerlich auf runde Filterblätter anwenden lässt, ist festzuhalten, dass dabei der eigentliche Stapelvorgang wesentlich komplizierter wird und nicht ohne zusätzlichen, apparativen Aufwand bewerkstelligt werden kann. Hinzu kommt, dass der so gebildete Stapel eine komplizierte Aussenform besitzt und sich kaum für eine Verpackung eignen dürfte.

Die US-A-2149499 offenbart einen Stapel von Papierblättern, bei welchem alle Blätter mit einer Einkerbung bzw. einer Lasche versehen sind, mit Ausnahme der jeweils dazwischenliegenden Kohlepapierblätter, um das Entfernen der letzteren zu erleichtern. Insbesondere mit runden Filterpapierblättern der gattungsgemässen Art ist eine solche Anordnung kaum oder nur sehr entfernt überhaupt vergleichbar.

Die vorliegende Erfindung löst die vorstehend angesprochenen Probleme auf einfache Weise durch die Merkmale des Patentanspruches.

Im folgenden wird ein Ausführungsbeispiele des erfindungsgemässen Stapels, unter Bezugnahme auf die beiliegenden Zeichnungen, näher erläutert. In einzelnen zeigen :

Fig. 1   eine Ansicht eines runden Filterpapierblattes mit randseitiger Lasche,

Fig. 2   eine Ansicht eines runden Filterpapierblattes mit randseitiger Einkerbung,

Fig. 3   die Ansicht eines Stapels, gebildet aus runden Filterpapierblättern gemäss Fig. 1 und 2,

Fig. 3a   einen vergrösserten Ausschnitt aus Fig. 3.

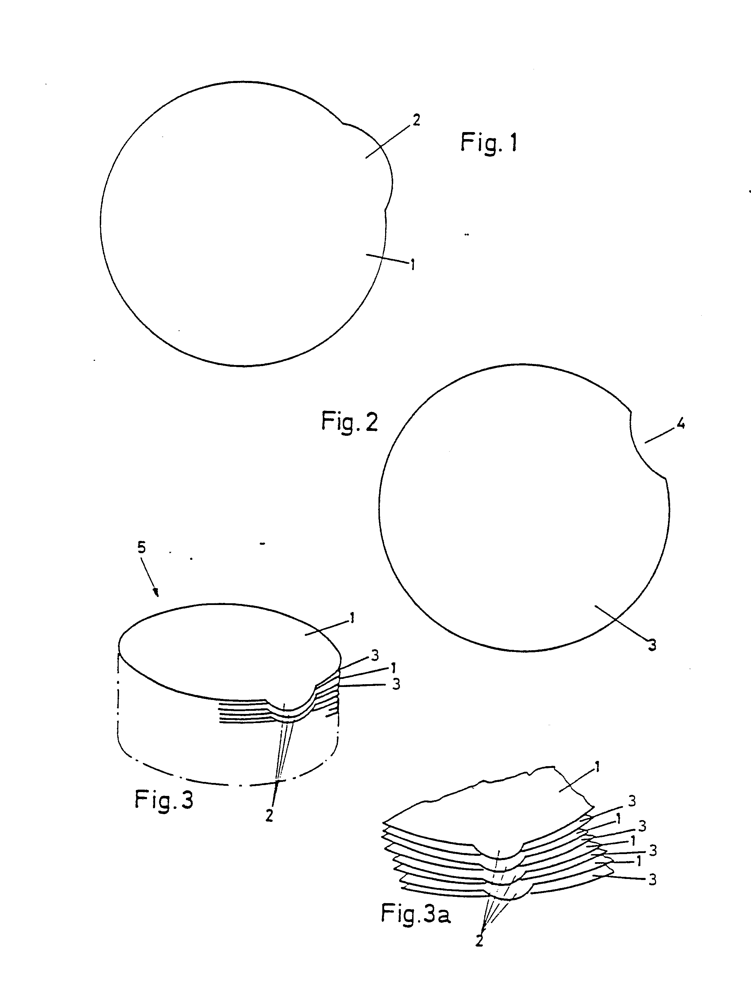

In der Fig. 1 ist ein einzelnes Filterpapierblatt zu sehen, das mit 1 bezeichnet ist und an einer bestimmten Stelle des Randes mit einer vorstehenden Lasche 2 versehen ist. Das Blatt besteht aus dem üblichen, für Filterpapier verwendeten Material und besitzt eine kreisrunde Form.

In der Fig. 2 ist ein ähnliches Filterpapierblatt 3 dargestellt, das an einer bestimmten Stelle seines Randbereiches mit einer Einkerbung 4 versehen ist.

Die Lasche 2 bzw. die Einkerbung 4 ist in der Breite mit Vorteil etwa daumenbreit bemessen und übt im übrigen auf die Funktion des Filters keinen Einfluss aus.

Der in Fig. 3 dargestellte Stapel, generell mit 5 bezeichnet, besteht aus einer Anzahl von Filterpapierblättern, z. B. 50 oder 100 Stück, die dicht aufeinander liegen. Abwechslungsweise ist dabei ein Filterpapierblatt 1 mit Lasche 2 (Fig. 1) und ein Filterpapierblatt 3 mit Einkerbung 4 aufeinandergestapelt. Zur Verdeutlichung ist in Fig. 3a ein vergrösserter, auseinandergezogener Ausschnitt aus dem Stapel von Fig. 3 gezeichnet. Es versteht sich, dass in Wirklichkeit die einzelnen Filterpapierblätter 1 und 3 dicht aufeinanderliegen und im allgemeinen ziemlich stark aneinander haften.

Bei einem dermassen zusammengesetzten Stapel besitzen die einzelnen Blätter abwechselnd unterschiedliche Gestalt, was das Ablösen und Entfernen des jeweils obersten Blattes des Stapels erheblich erleichtert, ohne dass bei der Stapelbildung zusätzlicher Aufwand erforderlich wäre.

## Patentanspruch

Stapel von Blättern (1, 3) aus Filterpapier mit im wesentlichen kreisförmigem Umriss, dadurch gekennzeichnet, dass innerhalb des Stapels (5) unmittelbar benachbart liegende Filterblätter (1, 3) unterschiedliche Gestalt aufweisen, indem im Stapel (5) abwechselnd Blätter (1) mit einer vorstehenden Lasche (2) und Blätter (3) mit einer randseitigen Einkerbung (4) angeordnet sind.

### Claim

Stack of sheets (1, 3) of filter paper having a substantially circular outline, characterized in that filter sheets (1, 3) lying directly next to each other within the stack (5) have different shapes in so far as sheets (1) having a protruding tab (2) and sheets (3) having a peripheral notch (4) are arranged alternately in the stack (5).

### Revendication

Pile de feuilles (1, 3) de papier filtre avec des contours essentiellement circulaires, caractérisée en ce que, à l'intérieur de la pile (5), des feuilles de papier filtre (1, 3) immédiatement voisines présentent une forme différente, la pile (5) comprenant alternativement des feuilles (1) avec une languette (2) en saillie et des feuilles (3) dont le bord présente une découpure (4).

Fig. 1

Fig. 2

Fig. 3

Fig. 3a